# EUROPÄISCHE PATENTANMELDUNG

(11) **EP 2 345 873 A1**
(43) Veröffentlichungstag der Anmeldung: **20.07.2011**
(21) Anmeldenummer: 10196263.7
(22) Anmeldetag: 21.12.2010
(51) Int. Cl.: G01D 4/00, H04B 1/16, H04B 1/38

(54) **Funkterminal-Vorrichtung mit autonomer Steuereinheit**

(30) Priorität: 15.01.2010 DE 202010000977 U
(71) Anmelder: MC Technologies GmbH, 30659 Hanover (DE)
(72) Erfinder: Bütow, Stefan, 82194, Gröbenzell (DE)
(74) Vertreter: Farago, Peter Andreas

(57) **Zusammenfassung**

Die vorliegende Erfindung betrifft eine Funkterminal-Vorrichtung (1), insbesondere eine GSM/GPRS-Funkterminal-Vorrichtung (1), umfassend ein Funkmodul (20), insbesondere ein GSM/GPRS-Funkmodul (20), das über mindestens einen steuerbaren Spannungsregler (40), über eine übergeordnete Mikrokontroller-Einheit (10) und über einen inhibierbaren Datensignalpegelkonverter (30) mit einer Funkterminal-Schnittstelle (2) der Funkterminal-Vorrichtung (1) in Verbindung steht, wobei der inhibierbare Datensignalpegelkonverter (30), der von der Mikrokontroller-Einheit (10) angesteuert wird, so ausgebildet ist, eine Signaldatenverbindung zwischen seriellen Schnittstellensignalen (SD1a,b) des Funkmoduls (20), die ausgehend und eingehend sein können, und Schnittstellensignalanschlüssen (SD2a, SD2b) der Funkterminal-Vorrichtung (1) herzustellen und zu inhibieren, wobei im Falle einer Inhibition die Signalausgänge des Pegelkonverters (30) jeweils in einen Tri-State Zustand versetzt werden; die Mikrokontroller-Einheit (10) so ausgebildet ist, eine Stromversorgung des Funkmoduls (20) über den steuerbaren Spannungsregler (40) mit unterschiedlichen, programmierbaren Spannungsrampen an- und wieder auszuschalten; die Mikrokontroller-Einheit (10) so ausgebildet ist, Zustände des Funkmoduls (20) zu überwachen und gegebenenfalls das Funkmodul per Reset-Steuersignal (RESET) und/oder per Ab- und Wiederanschalten der Versorgungsspannung (V3) zum Funkmodul (20) zurückzusetzen; die Funkterminal-Vorrichtung (1) eine Mikrokontroller-Einheit (10) mit einem Temperatursensor (60) auf der gleichen Platine aufweist; und die Funkterminal-Vorrichtung (1) eine LED-Einheit (70) aufweist.

## Beschreibung

Die vorliegende Erfindung betrifft eine Funkterminal-Vorrichtung, die im wesentlichen aus einem Funkmodul, insbesondere einem GSM/GPRS-Funkmodul, und einer autonomen übergeordneten Mikrocontroller-Einheit besteht, wobei die Funkterminal-Vorrichtung hauptsächlich als drahtloses Datenverbindungsmodul zwischen einem Gerät mit Datenverbindungsschnittstelle und einem davon entfernt liegenden Informations- oder Steuersystemsystem, beispielsweise einem Internet-Server fungiert Durch die autonome, übergeordnete Mikrocontroller-Einheit können unabhängig vom Funkmodul vorhandene Ein-und Ausgänge der Funkterminal-Vorrichtung sowie auch interne Signale und Versorgungsspannungen überprüft, an-, abgeschaltet und zum Funkmodul hin durchgeschaltet werden. Dadurch wird einesteils die Betriebssicherheit der Funkterminal-Vorrichtung erhöht, falls das Programm des Funkmoduls "festhängen" sollte, es lassen sich möglicherweise undefinierte Signalzustände der Funkmodulschnittstelle bei seinem An- und Ausschalten zur äußeren Schnittstelle der Funkterminal-Vorrichtung hin unterdrücken, und es können per Software die Einschaltspitzenströme für die Funkmodul-Stromversorgung und damit für die gesamte Funkterminal-Vorrichtung begrenzt werden. Überdies können durch einen Temperatursensor mögliche Temperaturdrift bedingte Messfehler des Analog-Digital-Umsetzers kompensiert werden und ein Einschalten des temperaturempfindlichen Funkmoduls definiert gesteuert werden.

### Stand der Technik

Bekannte Funkterminal-Vorrichtungen ohne eine zum Funkmodul zusätzliche Mikrokontroller-Einheit haben den Vorteil, dass dadurch ggf. die Kosten und der Bauraum für die zusätzliche Mikrokontroller-Einheit eingespart werden können, jedoch bestehen die Nachteile, dass
- bei einer kontinuierlich laufenden Überwachung von Mess- und/oder Datensignalen, die im Funkmodul meist leistungsstark dimensionierte Mikrokontroller-Einheit stets aktiv sein muß und einen entsprechenden Stromverbrauch erzeugt,
- die gesamte Software durch Integration zusätzlicher Applikationssoftware zur ohnehin schon vorhandenen Komplexität noch komplexer wird und ein Festhängen des Systems damit wahrscheinlicher wird, was zu einem kurzzeitigem oder gänzlichen Ausfall mit undefinierten bzw. fehlerhaften und kritischen Ausgangssignalen der Funkterminal-Vorrichtung führen kann,
- bei einem durch Vibration oder Temperatur verschleißbedingten oder Softwarefehler bedingten Ausfall des komplexen Funkmoduls separate Rechen- und Steuerprozesse kurzzeitig oder ganz abgebrochen werden und dadurch Berechnungen und Ausgangssignale der Funkterminal-Vorrichtung kritisch fehlerhaft werden können.

Bekannte Funkterminal-Vorrichtungen mit einer zum Funkmodul zusätzlichen Mikrokontroller-Einheit haben den Vorteil, dass eine Anwender-Software relativ einfach in der separaten Mikrokontroller-Einheit implementiert werden kann, dass das leichter gegen ein ähnliches ausgetauscht werden kann und dass separate Uberwachungs-, Rechen- und Steuerprozesse, die über die Eingangs-/Ausgangssignalleitungen der Funkterminal-Vorrichtung geleitet werden, meist einfacher programmierbar und betriebssicherer sind, als wenn sie auf dem Funkmodul als Softwareprozess ablaufen würden.

Nachteilig bei solchen Funkterminal-Vorrichtungen mit und auch ohne zusätzliche Mikrokontroller-Einheit ist das Fehlen einer programmierbaren Strombegrenzung, da bei einem digitalen Anschalten des Funkmoduls bzw der dafür vorgesehenen Versorgungsspannung kurzzeitig ein großer Ladestrom zur Aufladung von puffernden Kondensatoren an der Stromversorgung der Funkmodule fließt Weiterhin ist bei bekannten Funkterminal-Vorrichtungen nachteilig, dass Schnittstellensignale, insbesondere serielle Schnittstellensignale des Funkmoduls zur externen Schnittstelle der Funkterminal-Vorrichtung direkt oder direkt über einen Pegelwandler geleitet werden Dies hat zur Folge, dass die bei einem Ein- und Ausschalten des Funkmoduls möglichenfalls auftretenden, undefinierten Schnittstellensignale bei angeschlossenen, peripheren Geräten Kommunikationsprobleme verursachen können und dort zu deren Behebung aufwendig interpretiert werden müssen.

Auch wird bei den bekannten Funkterminal-Vorrichtungen mit zusätzlicher Mikrokontroller-Einheit ein auf der gleichen Platine sich befindlicher und mit der Mikrokontroller-Einheit direkt verbundener Temperatursensor vermisst, der das Funkmodul oder andere elektronische Komponenten in Abhängigkeit von der Umgebungstemperatur sicher an- oder abschalten und interne Offsets an Meßverstärkern und an Analog-Digital-Umsetzern zur Spannungsmessung kompensieren könnte,

Daher besteht eine Aufgabe der Erfindung in der Bereitstellung einer Funkterminal-Vorrichtung, insbesondere einer GSM/GPRS-Funkterminal-Vorrichtung, die die oben genannten Nachteile aus dem Stand der Technik beseitigt und eine möglichst hohe Betriebssicherheit, eine Software-Robustheit aufweist und mögliche Datensignalfehler unterdrückt oder kompensiert.

### Offenbarung der Erfindung

Die vorstehenden Aufgaben sowie weitere der Beschreibung zu entnehmende Aufgaben werden von einer Funkterminal-Vorrichtung gemäß Anspruch 1 gelöst. Weitere vorteilhafte Ausbildungen der Erfindung sind in den abhängigen Ansprüchen angegeben.

Erfindungsgemäß wird eine Funkterminal-Vorrichtung und insbesondere GSM/GPRS-Funkterminal-Vorrichtung für drahtlose Datenverbindungen zur Verfügung gestellt, die im wesentlichen aus einem Funkmodul, insbesondere einem GSM/GPRS-Funkmodul mit einer Antennenschnittstelle, insbesondere dabei einer Antenne, einer Mikrokontroller-Einheit mit einem internen Programm- und Datenspeicher und einem internen Analog-Digital-Umsetzer mit analogen Spannungsmeßeingängen, einem durch die Mikrokontroller-Einheit steuerbaren Spannungsregler für die Versorgungsspannung des Funkmoduls, einem durch die Mikrokontroller-Einheit steuerbaren, inhibierbaren Datensignalpegelkonverter zwischen Funkmodul und dem seriellen Schnittstellensignal der Funkterminal-Vorrichtung.Durch die zusätzliche Mikrokontroller-Einheit wird ein sicheres, kontrolliertes Einschalten, Überwachen und Steuern von Zuständen des Funkmoduls und von externen Mess- und Datensignalen möglich, auch wenn das Funkmodul "festhängen" oder zwecks Stromverbrauchsreduktion ausgeschaltet sein sollte. Durch die Mikrokontroller-Einheit wird eine erweiterte, programmierbare Watchdog-Funktion ermöglicht, die wesentlich für eine Betriebssicherheit und Zuverlässigkeit der Funkterminal-Vorrichtung beiträgt Ein integrierter, residenter Datenspeicher ermöglicht auch bei einem Festhängen des Funkmoduls eine Fehler-Code-Abspeicherung und eine nachträgliche Fehleranalyse. Uberdies ist ein Temperatursensor für die Möglichkeit einer zusätzlichen Überwachung und Steuerung der Funkterminal-Vorrichtung auch mit einer Messwertfehlerkorrektur integriert.

Über entsprechende Datenleitungen zwischen dem Funkmodul und der Mikrokontroller-Einheit lassen sich Funktionen und Zustände des Funkmoduls überwachen, auswerten und über Eingangs-/Ausgangssignalleitungen zu einer Funkterminal-Schnittstelle übermitteln. Mögliche Ausfälle des Funkmoduls können durch die Mikrokontroller-Einheit erkannt und möglichenfalls durch ein Reset-Signal oder ein Ab- und Wiederanschalten der Versorgungsspannung für das Funkmodul behoben werden, ohne dass dadurch die Eingangs-und Ausgangssignalleitungen der Funkterminal-Schnittstelle zwangsläufig gestört werden.

Das serielle Schnittstellensignal des Funkmoduls ist nicht direkt mit der seriellen Schnittstelle des Funkterminals verbunden, sondern wird über einen steuerbaren, inhibierbaren Datensignalpegelkonverter, dessen jeweilige Ausgangssignale über ein Steuersignal der Mikrokontroller-Einheit inhibiert und dabei insbesondere hochohmig geschaltet werden können, so dass undefinierte, fehlerhafte Datensignale während eines Ein- oder Ausschalt- bzw Boot-Vorgangs des Funkmoduls nicht zur äußeren seriellen Schnittstelle des Funkterminals gelangen, die bei daran angeschlossenen Geräten zu einer permanenten Kommunikationsablaufstörung führen können.

Ein steuerbarer Spannungsregler für die Versorgungsspannung des Funkmoduls lässt sich über einen Steuereingang durch die Mikrokontroller-Einheit programmiert kontrolliert an-und ausschalten, wobei dessen Ausgangsspannung und damit dessen Spannungsanstieg durch ein pulsweitenmoduliertes Steuersignal steuerbar ist; somit kann dessen Anstiegsflanke (über der Zeit) programmiert gesteuert werden. Zur Pufferung von Stromspitzen des Funkmoduls ist dessen Versorgungsspannungsleitung mit einem großen Kondensator im Milli-Farad-Bereich verbunden, so dass ein schneller Spannungsanstieg bei einem Einschalten dieser Versorgungsspannung auch immer direkt mit einem relativ großen Ladestrom des Kondensators verbunden ist. Durch den Spannungsregler, dessen Ausgangsspannung sich durch das pulsweitenmodulierte Steuersignal steuern läßt, kann auch ein langsamer Anstieg der Ausgangsspannung und damit der Versorgungsspannung des Funkmoduls erzeugt werden, der damit einen steuerbar begrenzten Ladestrom des puffernden Kondensators zur Folge hat. Einschaltstromstöße können dadurch vermieden werden. Überdies ist als Puffer-Kondensator ein Kondensator-Typ gewählt, der sich durch einen besonders geringen Innenwiderstand bei dennoch sehr großer Kapazitätsvolumendichte auszeichnet.

### Kurzbeschreibung der Zeichnungen

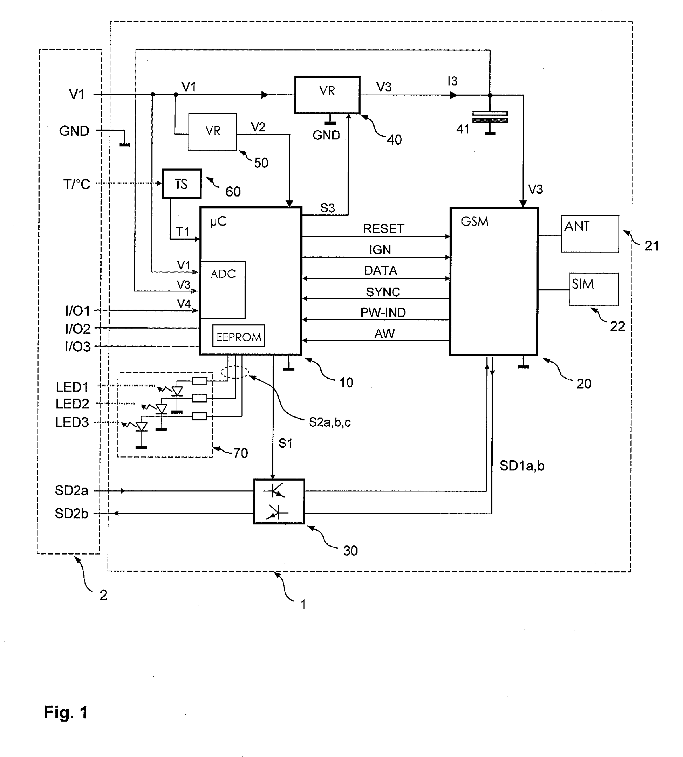

- Fig. 1: zeigt ein Blockschaltbild einer elektronischen Schaltungsanordnung einer Funkterminal-Vorrichtung mit einer Funkterminal-Schnittstelle zu einem anzuschließenden Gerät, mit internen elektronischen Blockschaltbildkomponenten und mit einer drahtlosen Antennenschnittstelle.

### Detaillierte Beschreibung eines Ausführungsbeispiels

In Fig. 1 ist ein Ausführungsbeispiel einer erfindungsgemäßen Funkterminal-Vorrichtung 1 , insbesondere einer GSM/GPRS-Funkterminal-Vorrichtung 1 als Blockschaltbild dargestellt, die eine Funkterminal-Schnittstelle 2 aufweist und im wesentlichen bestehend aus einem Funkmodul 20 mit einer Antennen-Schnittstelle 21 und SIM-Karten-Schnittstelle 22, aus Spannungsreglern 40, 50, aus einem Datensignalpegelkonverter 30 für serielle Datensignale, einem Temperatursensor 60, aus einer LED-Einheit 70 und aus einer übergeordneten Mikrokontroller-Einheit 10. Funktional stellt die Funkterminal-Vorrichtung 1 hauptsächlich ein Schnittstellenmodul zwischen einer Funkterminal-Schnittstelle 2, an die ein zu überwachendes oder zu steuerndes Gerät angeschlossen werden kann, und einer weiter entfernten Datenauswerte- und Steuereinheit dar, die drahtlos über die Antennenschnittstelle 21 des Funkmoduls 20 mit der Funkterminal-Vorrichtung 1 verbunden ist. Insbesondere besteht dabei das Funkmodul 20 aus einem GSM/GPRS-Funkmodul 20

Die Funkterminal-Schnittstelle 2 umfasst dabei insbesondere die in Fig.1 dargestellten Verbindungsanschlüsse, wie
- eine Leitung V1 zu einer externen Stromversorgung (in Bezug zur Masse-Leitung GND),
- eine Masse-Leitung GND,
- eine Wärmeübertragung T/°C der Umgebung mit der Elektronikplatine,
- l/O1 - l/03, die durch die Mikrokontroller-Einheit als Ein- oder Ausgangssignalleitungen programmierbar sind, insbesondere kann über I/O1 eine Spannung gemessen werden,
- LED-Ausgangssignale LED1 - LED3 und
- serielle Schnittstellenleitungen SD2a, SD2b, die insbesondere eine RS232 Schnittstelle darstellen können.

Überdies sind auch mehr oder weniger Ein-/Ausgangssignalleitungen als Teile der Funkterminal-Schnittstelle 2 denkbar.

Die Mikrokontroller-Einheit 10 stellt in der Funkterminal-Vorrichtung 1 die zentrale, übergeordnete und autonome Mess- und Steuer-Einheit dar. Sie enthält einen internen Programm- und Datenspeicher (EEPROM) und einen Analog-Digital-Umsetzer ADC und weist verschiedene Eingangs- und Ausgangssignalleitungen bzw. Steuerleitungen auf, die hauptsächlich mit dem Funkmodul 20, der Funkterminal-Schnittstelle 2 und mit anzusteuernden Bauelementen 30, 40, 60, 70 in Verbindung stehen, die nachfolgend beschrieben werden. Die Steuer- und Datenleitungen zwischen der Mikrokontroller-Einheit 10 und dem Funkmodul 20 umfassen dabei eine Steuersignal-Leitung RESET für ein Zurücksetzen des Funkmoduls 20, eine Ignition-Steuersignal-Leitung IGN zum Anschalten des Funkmoduls 20 durch die Mikrokontroller-Einheit 10, Datensignalleitungen DATA für eine bidirektionale Datenkommunikation zwischen der Mikrokontroller-Einheit 10 und dem Funkmodul 20, eine Power-Indikator-Signalleitung PW-IND für die Erkennung eines internen Funktionszustandes des Funkmoduls 20, eine Eingangssignalleitung SYNC zur Übermittlung eines Empfangs- und Sendezustandes des Funkmoduls 20 und eine Watchdog-Signalleitung AW (awake), das durch repetitives Umschalten des binären Signales durch das Funkmodul 20 dessen Wachzustand (kein Festhängen des Programmablaufs) anzeigt. Ein Temperatursensormeßsignal T1 eines Temperatursensors 60 kann von der Mikrokontroller-Einheit 10 für Steuerzwecke herangezogen werden, um beispielsweise das Funkmodul 20 nur innerhalb eines bestimmten Temperaturbereichs, der vorab gemessen wird, unter Strom zu setzen und anzuschalten. Der auf der gleichen Elektronikplatine platzierte ADC, auf der auch die Mikrokontroller-Einheit platziert ist, ermöglicht beispielsweise auch eine bessere, temperaturkompensierte Spannungsmessung durch die ADC Einheit. Mit dem in der Mikrokontroller-Einheit 10 integrierten Analog-Digital-Umsetzer ADC können eine interne Spannung V1 und eine interne Spannung V3 der Funkterminal-Vorrichtung 1 und eine Spannung V4, die mit der Funkterminal-Schnittstellenleitung I/O1 in Verbindung steht, gemessen werden. Darüber hinaus können auch interne Spannungen durch den Analog-Digital-Umsetzer ADC der Mikrokontroller-Einheit 10 gemessen und ausgewertet werden; dabei ist es aber auch denkbar, dass diese Spannungssignale durch einen im Funkmodul 20 integrierten ADC gemessen werden.. Durch den in der Mikrokontroller-Einheit 10 integrierten Datenspeicher (EEPROM) können Messwerte und möglichenfalls auftretende Fehlermeldungen resident abgespeichert werden, um sie dann später entweder per Funkterminal-Schnittstelle 2 auslesen oder per Funkmodul 20 übertragen zu können.

Eine Versorgungsspannung V2 der Mikrokontroller-Einheit 10 wird durch einen Spannungsregler 50 bereitgestellt, der aus einer Stromversorgungsspannung V1 der Funkterminal-Vorrichtung 1 eine interne Versorgungsspannung V2, insbesondere für die Mikrokontroller-Einheit, erzeugt.

Eine Versorgungsspannung V3 für das Funkmodul 20 wird durch einen Spannungsregler 40 bereitgestellt, der ebenfalls aus der Stromversorgungsspannung V1 der Funkterminal-Vorrichtung 1 eine Versorgungsspannung V3 erzeugt, die durch einen Kondensator 41, der insbesondere im Milli-Farad-Bereich und mit einem niedrigen Innenwiderstand ausgelegt ist, zusätzlich gepuffert ist. Dabei kann der Kondensator 41 zwei Zwecke erfüllen, einerseits kann der Spannungsregler 40 einfacher ausgeführt werden, da hochfrequente Stromspitzen vom Kondensator 41 abgefangen werden, andererseits treten trotz hochfrequenter Stromspitzen des Funkmoduls 20 dadurch weniger Spannungsschwankungen auf der Leitung V3 und damit weniger elektromagnetische Emissionen auf. Insbesondere ist der Spannungsregler 40 durch eine Steuersignal-Leitung S3 steuerbar ausgelegt, so dass durch ein Pulsweiten moduliertes Steuersignal S3 eine entsprechende Versorgungsspannung V3 am Ausgang des Spannungsreglers 40 erzeugt wird. Auf diese Weise läßt sich die Versorgungsspannung V3 durch die Mikrokontroller-Einheit 10 programmiert langsam erhöhen und absenken, so dass im Fall eines Anschaltens der Ladestrom 13 für den angeschlossenen Kondensator 41 in moderaten Grenzen gehalten werden kann.. Dadurch kann auch die externe Stromversorgung für die Stromversorgungsspannung V1 der Funkterminal-Vorrichtung 1 einfacher und kostengünstiger ausgelegt werden.

Das Funkmodul 20, insbesondere das GSM-Funkmodul 20 weist eine SIM Karte 22 für eine Funknetzverbindung, insbesondere für eine GSM-Funknetzverbindung auf und besitzt eine Antennen-Schnittstelle 21, die insbesondere als Antennenmodul ANT ausgeführt sein kann. Das Funkmodul 20 weist eine serielle Schnittstelle SD1a,b zur Datenkommunikation auf, deren Signale SD1a,b über einen Pegelwandler 30 jeweils auf einen anderen Signalpegel gehoben werden und so als serielle Schnittstellensignalleitungen SD2a, SD2b mit Funkterminal-Schnittstelle 2 verbunden sind. Insbesondere ist der Pegelwandler 30 dabei als inhibierbarer RS232 Pegelwandler 30 ausgeführt. Der Steuersignaleingang S1 am Pegelwandler 30 ist insbesondere ein Steuersignaleingang S1 mit Inhibitionsfunktion, der im Falle eines gesetzten Inhibitionssignals S1 bewirkt, dass sämtliche Schnittstellensignale SD1a,b und SD2a, SD2b nicht weitergeleitet bzw durchgeschaltet sondern in einen Tri-State-Zustand versetzt werden. Dies kann insbesondere dann vorteilhaft sein, wenn bei einem Anschalten der Versorgungsspannung V3 des Funkmoduls 20 oder nach einem Reset des Funkmoduls 20 kurzzeitig undefinierte und damit fehlerhafte Datenausgangssignale auf der seriellen Schnittstellenleitung SD1a,b gesendet werden.

Die LED-Anzeigeeinheit 70 wird über LED-Steuersignale S2a,b,c durch die Mikrokontroller-Einheit 10 angesteuert. Dabei können interne Zustände der Funkterminal-Vorrichtung 1 durch verschiedenfarbige LEDs und dabei codiert gepulste LED-Lichtanzeigen durch die LED-Signale LED1 - LED3 über die Funkterminal-Schnittstelle 2 angezeigt werden,

### Bezugszeichenliste

- 1: Funkterminal-Vorrichtung
- 2: Funkterminal-Schnittstelle
- 10: Mikrokontroller-Einheit (µC)
- 20: Funkmodul, insbesondere ein GSM-Funkmodul
- 21: Antennenschnittstelle des Funkmoduls
- 22: SIM Karte des Funkmoduls
- 30: Datensignalpegelkonverter, insbesondere RS232 Datensignalpegelkonverter
- 40: Spannungs-Regler für die Versorgungsspannung des Funkmoduls
- 41: Kondensator
- 50: Spannungs-Regler für die Versorgungsspannung des µC
- 60: Temperatursensor
- 70: LED-Einheit
- ADC: Analog-Digital-Umsetzer
- AW: Watchdog-Signal (awake)
- DATA: Datensignalleitungen
- EEPROM: Datenspeicher
- l3: Strom zwischen dem Spannungsregler und dem Kondensator
- IGN: Ignition-Steuersignal-Leitung
- l/O1-l/04: Eingangs-/Ausgangssignale
- LED1 - LED3: LED-Signale
- PW-IND: Power-Indikator-Signalleitung
- RESET: Reset-Steuersignal
- S1: Steuersignal
- S2a,b,c: LED-Steuersignale
- S3: Steuersignal
- SD1a,b: serielles Schnittstellensignal des Funkmoduls
- SD2a, SD2b: serielles Schnittstellensignal der Funkterminal-Vorrichtung
- SYNC: Eingangssignalleitung Sync
- T/°C: Umgebungstemperatur
- T1: Temperatursensormeßsignal
- V1: Stromversorgungsspannung
- V2: Versorgungsspannung des µC
- V3: Versorgungsspannung des Funkmoduls, insbesondere GSM-Modul
- V4: Spannungsmeßeingang

## Patentansprüche

1. Funkterminal-Vorrichtung (1), insbesondere eine GSM/GPRS-Funkterminal-Vorrichtung (1), umfassend ein Funkmodul (20), insbesondere ein GSM/GPRS-Funkmodul (20), das über mindestens einen steuerbaren Spannungsregler (40), über eine übergeordnete Mikrokontroller-Einheit (10) und über einen inhibierbaren Datensignalpegelkonverter (30) mit einer Funkterminal-Schnittstelle (2) der Funkterminal-Vorrichtung (1) in Verbindung steht, wobei
- der inhibierbare Datensignalpegelkonverter (30), der von der Mikrokontroller-Einheit (10) angesteuert wird, so ausgebildet ist, eine Signaldatenverbindung zwischen seriellen Schnittstellensignalen (SD1a,b) des Funkmoduls (20), die ausgehend und eingehend sein können, und Schnittstellensignalanschlüssen (SD2a, SD2b) der Funkterminal-Vorrichtung (1) herzustellen und zu inhibieren, wobei im Falle einer Inhibition die Signalausgänge des Pegelkonverters (30) jeweils in einen Tri-State Zustand versetzt werden;
- die Mikrokontroller-Einheit (10) so ausgebildet ist, eine Stromversorgung des Funkmoduls (20) über den steuerbaren Spannungsregler (40) mit unterschiedlichen, programmierbaren Spannungsrampen an- und wieder auszuschalten;
- die Mikrokontroller-Einheit (10) so ausgebildet ist, Zustände des Funkmoduls (20) zu überwachen und gegebenenfalls das Funkmodul per Reset-Steuersignal (RESET) und/oder per Ab- und Wiederanschalten der Versorgungsspannung (V3) zum Funkmodul (20) zurückzusetzen;
- die Funkterminal-Vorrichtung (1) eine Mikrokontroller-Einheit (10) mit einem Temperatursensor (60) auf der gleichen Platine aufweist; und
- die Funkterminal-Vorrichtung (1) eine LED-Einheit (70) aufweist.

2. Funkterminal-Vorrichtung (1) gemäß Anspruch 1, wobei das Funkmodul (20) einen nächst höheren Standard als GSM/GPRS, insbesondere einen EDGE, einen UMTS- oder einen CDMA Standard aufweist

3. Funkterminal-Vorrichtung (1) gemäß Anspruch 1 oder 2, wobei die Mikrokontroller-Einheit (10) einen Analog-Digital-Umsetzer (ADC) zur Messung einer Vielzahl von Spannungen (V1, V3, V4) einschließlich der Versorgungsspannung (V3) enthält.

4. Funkterminal-Vorrichtung (1) gemäß Anspruch 1 bis 3, wobei die Versorgungsspannung (V3) zum Funkmodul (20) durch eine Kapazität im Milli-Farad Bereich gepuffert ist.

5. Funkterminal-Vorrichtung (1) gemäß Anspruch 1 bis 4, wobei die Funkterminal-Vorrichtung (1) einer LED-Einheit (70) und weitere Signalindikatoren, insbesondere eine Lautsprechereinheit aufweist

6. Funkterminal-Vorrichtung (1) gemäß Anspruch 1 bis 5, wobei die Funkterminal-Vorrichtung (1) zusätzlich zu einem Temperatursensor (60) auch weitere Sensoren aufweist.

7. Funkterminal-Vorrichtung (1) gemäß Anspruch 1 bis 6, wobei die Funkterminal-Vorrichtung (1) zusätzlich einen Akkumulator zur Pufferung der Versorgungsspannung V1 aufweist.

8. Funkterminal-Vorrichtung (1) gemäß Anspruch 1 bis 7, wobei die Funkterminal-Vorrichtung (1) eine in der Funkterminal-Vorrichtung (1) integrierte Antenne und/oder einen externen Antennenanschluss aufweist.

9. Funkterminal-Vorrichtung (1) gemäß Anspruch 1 bis 8, wobei die darin enthaltene übergeordnete Mikrokontroller-Einheit (10) als autonomer Mikrokontroller im Funkmodul (20) integriert ist.

10. Funkterminal-Vorrichtung (1) gemäß Anspruch 1 bis 9, wobei die Schnittstelle (2) der Funkterminal-Vorrichtung (1) eine Vielzahl von weiteren, programmierbaren und auswertbaren Ein-/Ausgangsleitungen (I/O1, I/O2, I/O3) aufweist.

11. Funkterminal-Vorrichtung (1) gemäß Anspruch 1 bis 10, wobei die Funkterminal-Vorrichtung (1) weiterhin so ausgebildet ist, mindestens eine Meß-, Auswerte- und Steuerfunktion aufzuweisen, die entweder im Zusammenhang mit dem Funkmodul (20) oder unabhängig davon abläuft.

12. Funkterminal-Vorrichtung (1) gemäß Anspruch 11, wobei die Funkterminal-Vorrichtung (1) weiterhin so ausgebildet ist, dass der Programmablauf einer Meß-, Auswerte- und Steuerfunktion auch einen Datenaustausch mit einem entfernten Server, einem Meß-und/oder Steuergerät, das per Funkmodul (20) angebunden ist, einschließt.
